Europäisches Patentamt

European Patent Office

Office européen des brevets

(11) Veröffentlichungsnummer: **0 260 402**
B1

# (12) EUROPÄISCHE PATENTSCHRIFT

(45) Veröffentlichungstag der Patentschrift:
13.12.89

(51) Int. Cl.⁴: **H01M 2/02, H01M 12/02**

(21) Anmeldenummer: 87110217.4

(22) Anmeldetag: 15.07.87

(54) Trockenelementebatterie mit Sauerstoffdepolarisation.

(30) Priorität: 13.09.86 DE 3631203

(43) Veröffentlichungstag der Anmeldung:
23.03.88 Patentblatt 88/12

(45) Bekanntmachung des Hinweises auf die Patenterteilung:
13.12.89 Patentblatt 89/50

(84) Benannte Vertragsstaaten:
AT BE CH DE FR GB IT LI NL

(56) Entgegenhaltungen:
DD-A- 53 129
DE-A- 2 804 206
FR-A- 2 485 268
GB-A- 1 176 488

(73) Patentinhaber: VARTA Batterie Aktiengesellschaft, Am Leineufer 51, D-3000 Hannover 21(DE)

(72) Erfinder: Lenz, Helmut, Hahnenbergstrasse 25, D-7080 Aalen(DE)

(74) Vertreter: Kaiser, Dieter Ralf, Dipl.-Ing., Gundelhardtstrasse 72, D-6233 Kelkheim/Ts.(DE)

**Beschreibung**

Die Erfindung betrifft eine Trockenelementebatterie mit Sauerstoffdepolarisation, deren Gehäusedeckel mindestens eine Lufteintrittsöffnung besitzt und die mit Mitteln zum Verschluß der Lufteintrittsöffnung vor Inbetriebnahme versehen ist. Insbesondere bezieht sich die Erfindung auf Weidezaunbatterien. Bei diesen sind in der Regel mehrere galvanische Luftsauerstoff-Elemente in einem gemeinsamen Batteriebehälter eingebaut, dessen oberer Verschluß im einfachsten Fall aus einer Vergußmasse bestehen kann, durch welche hindurch Luftzuführungsröhrchen zu den positiven Depolarisatorelektroden aus gepreßter Aktivkohle führen.

Bei neueren Batterieausführungen, z.B. gemäß FR-PS 2 485 268, wurde auf die Gefahr einer allmählichen Selbstentladung infolge Oxidation der negativen Zinkelektroden bei längerer Lagerhaltung oder Nichtgebrauch dadurch Rücksicht genommen, daß die Luftzuführungskanäle an den Boden von in den Batteriedeckel eingearbeiteten Längsnuten verlegt wurden, welche der Aufnahme von Anschlußlitzen dienen, derart, daß die eingelegten Litzen die Bodenlöcher der Kanäle dicht verschließen. Bei Inbetriebnahme erfolgt durch das Herausnehmen der an den Litzenenden angebrachten Kontaktanschlüsse eine zwangsläufige Belüftung und Aktivierung der Luftsauerstoffelemente infolge des Luftzutritts.

Aus der DD-PS 53 129 ist eine ähnliche Belüftungseinrichtung für galvanische Trockenelementebatterien mit Luftsauerstoffdepolarisation bekannt, bei welcher die Längsnute von den eingelegten Anschlußlitzen jedoch wegen größerer Breite nicht dichtend ausgefüllt werden, so daß sie über ihre gesamte Länge mit luftabschließenden Klebestreifen verschlossen werden müssen. Vor Inbetriebsetzung muß der Klebestreifen zur Belüftung entfernt oder wenigsten im Bereich der Belüftungslöcher durchstoßen werden.

Bei dieser Trockenelementebatterie kann es vorkommen, daß bei Inbetriebnahme nach dem Freilegen der Anschlußlitzen aus Unkenntnis das die Luftzufuhr verhindernde Klebeband wieder aufgesetzt wird.

Ferner schließen beide erwähnten Einrichtungen die Möglichkeit nicht aus, der Batterie unbefugt Kapazität zu entnehmen und sie äußerlich wieder in den Originalzustand zu versetzen.

Der Erfindung liegt deshalb die Aufgabe zugrunde, eine Trockenelementebatterie nach dem eingangs angegebenen Gattungsbegriff so zu gestalten, daß Irrtümer bei der funktionsgerechten Inbetriebsetzung ausgeschlossen sind, daß dem Käufer die Gewähr für eine ungebrauchte Batterie gegeben werden kann und daß eine unbefugte Benutzung nicht möglich ist.

Die Aufgabe wird erfindungsgemäß mit den im kennzeichnenden Teil des Anspruchs 1 angegebenen Mitteln gelöst.

Danach wird die Frischhaltung der Batterie bis zur Ingebrauchnahme durch eine Abdeckplatte garantiert, welche die Belüftung der Zellen erst durch ihre Beschädigung freigibt und danach nicht mehr benutzt werden kann.

Die Abdeckplatte besteht aus Kunststoff oder einem anderen Material und ist mit dem Batteriedeckel des die Luftsauerstoffelemente aufnehmenden Batteriebehälters unlösbar verbunden. Die unlösbare Verbindung ist so gestaltet, daß eine Trennung der Abdeckplatte vom Batteriedeckel nur gewaltsam und irreversibel möglich ist. In diesem Sinne kann die Befestigungsstelle besonders vorteilhaft als Sollbruchstelle ausgebildet sein. Gegebenenfalls können aus mehreren vorhandenen Befestigungsstellen auch mehrere Sollbruchstellen resultieren. Bei gegebenen Voraussetzungen hinsichtlich der Materialauswahl von Batteriedeckel und Abdeckplatte, die in der Regel aus zumindest ähnlichen thermoplastischen Kunststoffen bestehen, kommt als Befestigungsstelle auch eine Schweißverbindung oder eine Klebeverbindung infrage.

In einer besonders günstigen Ausführungsform der erfindungsgemäßen Trockenelementebatterie sind in den Gehäusedeckel Längsrillen zur Aufnahme der Verbindungskabel für die Stromentnahme eingearbeitet, welche sich an ihrem einen Ende durch wannenförmig erweiterte Ausnehmungen des Gehäusedeckels hindurcherstrecken, in denen die Anschlußkontakte an den Kabelenden abgelegt sind.

Die Lufteintrittsöffnung, gegebenenfalls auch mehrere derselben, und die wannenförmigen Ausnehmungen im Gehäusedeckel sind nun erfindungsgemäß so zueinander angeordnet, daß die in ihrem Umriß entsprechend dimensionierte Abdeckplatte alle diese Öffnungen überdeckt und dabei insbesondere die Lufteintrittsöffnung durch einen festen Preßsitz dicht verschließt.

Der Preßsitz wird erfindungsgemäß mit Hilfe eines Fügeelements herbeigeführt, welches der Abdeckplatte an ihrer Unterseite angeformt ist und welches die Abdeckplatte in dem darunter befindlichen Gehäusedeckel fest verankert. Auch in diesem Falle ist die einmal installierte Abdeckplatte nur durch gewaltsames Herausreißen aus der Verankerung vom Gehäusedeckel lösbar, wobei das Fügeelement abbricht, mithin eine Sollbruchstelle bildet.

Anhand zweier Figurendarstellungen sollen insbesondere die Funktionsweise des Fügeelements und das Zustandekommen seiner irreversiblen Positionierung anschaulich gemacht werden.

Figur 1 zeigt eine Trockenelementebatterie mit einer Versiegelung des Gehäusedeckels durch eine erfindungsgemäße Abdeckplatte.

Figur 2 zeigt den Mechanismus der nicht wieder lösbaren Befestigung der erfindungsgemäßen Abdeckplatte am Gehäusedeckel mittels Fügeelement in stark vergrößerter Wiedergabe.

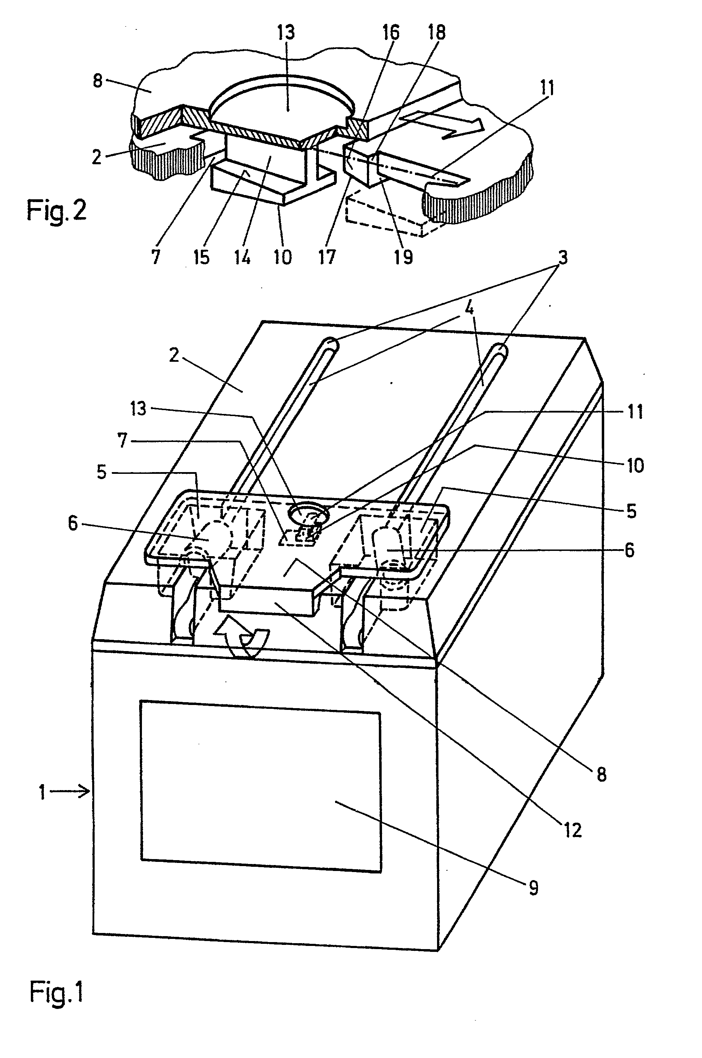

Gemäß Figur 1 besitzt der Gehäusedeckel 2 der Trockenelementebatterie 1 Längsrillen 3 zur Aufnahme von Anschlußkabeln 4 sowie größere Vertiefungen 5 zum Einlegen der Anschlußkontakte 6. Letztere sind gemeinsam mit der Lufteintrittsöffnung 7 im Gehäusedeckel von der Abdeckplatte 8 überdeckt und daher gestrichelt dargestellt. Ein Etikett 9 befindet sich auf der Stirnseite der Batterie.

Zur Befestigung am Gehäusedeckel ist der Abdeckplatte an der Unterseite ein Fügeelement 10 mit einem auf dem Kopf stehenden T-Profil angeformt. Bei der Montage der Abdeckplatte auf den Deckel läßt sich das Fügeelement leicht in die Lufteintrittsöffnung einführen und dann mit dem senkrechten Teils seines T-Profils in einen in den Gehäusedeckel eingeschnittenen schlitzförmigen Fortsatz 11 der Lufteintrittsöffnung 7 so weit einschieben, bis die Abdeckplatte, die vorteilhaft mit einem Griffende 12 versehen ist, mit diesem Griffende an der Stirnseite des Gehäusedeckels anschlägt.

In dieser Position ist die Abdeckplatte aufgrund einer Verrastung des Fügeelements mittels keilförmiger Flächen oder Schnappkanten, die weiter unten erläutert werden, nicht mehr vom Gehäusedeckel ohne Beschädigung abnehmbar, was ihr die Qualität eines Frischesiegels verleiht, weil sie die Batterie bis zur Inbetriebsetzung vor einer Belüftung und Entnahme der Kontaktanschlüsse schützt.

Zur Ingebrauchnahme wird die Abdeckplatte am Griffende gefaßt und hochgerissen (Pfeil), wobei es zum zwangsweisen Bruch der Befestigungsstelle kommt. Der Abriß des Fügeelements, welches in dem Schlitz 11 des Gehäusedeckels verbleibt, wird in vorteilhafter Weise dadurch erleichtert, daß das Fügeelement an eine eigens für diesen Zweck geschaffene Schwachstelle 13 der Abdeckplatte mit einer verminderten Wandstärke angeformt ist.

In der Detail-Darstellung nach Figur 2 ist das Fügeelement 10 mit seiner unmittelbaren Umgebung nach dem ersten Montageschritt wiedergegeben, bei welchem die Abdeckplatte 8 auf den Gehäusedeckel 2 zunächst so aufgelegt wird, daß das Fügeelement in die Lufteintrittsöffnung 7 hineinrutscht und die Abdeckplatte demzufolge glatt auf dem Gehäusedeckel aufliegt.

In seine Endposition gelangt das Fügeelement nunmehr in einem zweiten Montageschritt dadurch, daß man die Abdeckplatte in Richtung des Pfeiles verschiebt, wobei der senkrechte Teil 14 des T-förmigen Flügelelements von dem schlitzförmigen Forsatz 11 der Lufteintrittsöffnung 7 (hier nur mit einer Seitenwand dargestellt) aufgenommen wird.

Das senkrechte Teil 14 des Fügeelements und ebenso sein waagerechtes Teil 15 sind gemäß der Erfindung keilförmig ausgebildet. Am Eingang des Schlitzes 11 befinden sich weiterhin keilförmige Vorsprünge 16, 17, welche an ihren Rückseiten Schnappkanten oder Hinterschneidungen 18, 19 bilden.

Durch diese Formgebungen wird erreicht, daß beim Einschieben des Fügeelements in den Schlitz 11, mit den dünneren Keilenden voran, die schrägen Keilflächen gegen leichten Widerstand auf die keilförmigen Vorsprünge 16, 17 aufgleiten und daß das Fügeelement, nachdem es die keilförmigen Vorsprünge überwunden hat, in die Hinterschneidungen 18, 19 einrastet. Aus dieser Endposition heraus, welche der punktierte Keilumriß andeuten soll, kann das Flügelelement nicht mehr zurückgezogen wer- den, so daß eine zerstörungsfreie Demontage der Abdeckplatte, die eine Erneuerung ihrer Siegelfunktion erlauben würde, nicht möglich ist. Vielmehr bleiben Abdeckplatte 8 und Gehäusedeckel 2 jetzt luftabschließend gegeneinander verspannt. Zu dieser Verspannung tragen keilförmige Wandabschrägungen des Gehäusedeckels 2 entlang dem schlitzförmigen Fortsatz 11 sowohl in der Vertikalen als auch in der Horizontalen bei, welche, wie Figur 2 erkennen läßt, mit den keilförmigen Teilen 14, 15 korrespondieren und an denen letztere mit festem Paßsitz anliegen.

## Patentansprüche

1. Trockenelementebatterie mit Sauerstoffdepolarisation, deren Gehäusedeckel mindestens eine Lufteintrittsöffnung besitzt und die mit Mitteln zum Verschluß der Lufteintrittsöffnung vor Inbetriebnahme versehen ist, dadurch gekennzeichnet, daß die Lufteintrittsöffnung (7) mittels einer Abdeckplatte (8) luftdicht verschlossen ist, welche an mindestens einer Befestigungsstelle (13) mit dem Zellendeckel (2) unlösbar verbunden ist und welche zur Inbetriebnahme der Zelle nur unter Zerstörung der Befestigungsstelle entfernbar ist.

2. Trockenelementebatterie nach Anspruch 1, dadurch gekennzeichnet, daß die Befestigungsstelle eine Sollbruchstelle ist.

3. Trockenelementebatterie nach Anspruch 1, dadurch gekennzeichnet, daß die Befestigungsstelle eine Schweißverbindung oder Klebeverbindung ist.

4. Trockenelementebatterie nach einem der Ansprüche 1 bis 3, dadurch gekennzeichnet, daß der Gehäusedeckel eingearbeitete Längsrillen (3) zur Aufnahme der Verbindungskabel (4) für die Stromentnahme und von der Abdeckplatte überdeckte Vertiefungen (5) zur Aufnahme der Anschlußkontakte (6) besitzt.

5. Trockenelementebatterie nach einem der Ansprüche 1 bis 4, dadurch gekennzeichnet, daß die Abdeckplatte mit mindestens einem Griffende (12) versehen ist.

6. Trockenelementebatterie nach einem der Ansprüche 2 bis 5, dadurch gekennzeichnet, daß die Sollbruchstelle von einem der Abdeckplatte angeformten Fügeelement (11) gebildet ist.

7. Trockenelementebatterie nach Anspruch 6, dadurch gekennzeichnet, daß das Fügeelement in einer seiner Form angepaßten Ausnehmung (11) des Gehäusedeckels mittels keilförmiger Flächen oder Schnappkanten (18, 19) unlösbar verrastet ist.

8. Trockenelementebatterie nach Anspruch 7, dadurch gekennzeichnet, daß das Fügeelement an einem in ihrer Dicke geminderten Bereich (13) der Abdeckplatte angeordnet ist.

9. Trockenelementebatterie nach den Ansprüchen 6 bis 8, dadurch gekennzeichnet, daß das Fügeelement vorzugsweise ein auf dem Kopf stehendes T-Profil ist, dessen senkrechtes Teil (14) und dessen waagerechtes Teil (15) keilförmig ausgebildet sind.

10. Trockenelementebatterie nach Anspruch 9, dadurch gekennzeichnet, daß nach dem Einrasten des Fügeelements (10) in den schlitzförmigen Fortsatz (11) der Luftzuführungsöffnug (7) die keilförmigen Teile (14, 15) an korrespondierenden keilförmigen Wandabschrägungen des Gehäusedeckels (2) entlang dem Fortsatz (11) mit Paßsitz anliegen, wodurch Abdeckplatte (8) und Gehäusedeckel (2) luftabschließend gegeneinander verspannt sind.

## Revendications

1. Batterie d'éléments secs à dépolarisation par l'oxygène, le couvercle du boîtier de ces éléments comportant au moins un orifice d'entrée d'air et étant muni de moyens pour fermer cet orifice d'entrée d'air avant la mise en service, batterie caractérisée en ce que l'orifice d'entrée d'air (7) est fermé de façon étanche à l'air par une plaque de recouvrement (8), qui est reliée de façon inamovible au couvercle (2) des éléments en au moins un emplacement de fixation (13) et qui, pour la mise en service des éléments, ne peut être enlevée qu'en détruisant cet emplacement de fixation.

2. Batterie d'éléments secs selon la revendication 1, caractérisée en ce que l'emplacement de fixation est un emplacement prévu pour la rupture.

3. Batterie d'éléments secs selon la revendication 1, caractérisée en ce que l'emplacement de fixation est un assemblage par soudage ou un assemblage par collage.

4. Batterie d'éléments secs selon une des revendications 1 à 3, caractérisée en ce que le couvercle du boîtier comporte des rainures longitudinales (3) destinées à recevoir le câble de liaison (4) prévu pour le prélèvement du courant, et des cavités (5), recouvertes par la plaque de recouvrement, et destinées à recevoir les contacts de raccordement (6).

5. Batterie d'éléments secs selon une des revendications 1 à 4, caractérisée en ce que la plaque de recouvrement est munie d'au moins une extrémité de préhension (12).

6. Batterie d'éléments secs selon une des revendications 2 à 5, caractérisée en ce que l'emplacement prévu pour la rupture est constitué par un élément d'assemblage (11) formé sur la plaque de recouvrement.

7. Batterie d'éléments secs selon la revendication 6, caractérisée en ce que l'élément d'assemblage est encliqueté de façon inamovible dans un évidement (11), adapté à sa forme, du couvercle du boîtier, au moyen de surfaces en forme de coin ou d'arêtes d'encliquetage (18, 19).

8. Batterie d'éléments secs selon la revendication 7, caractérisée en ce que l'élément d'assemblage est disposé sur une zone (13) réduite en épaisseur, de la plaque de recouvrement.

9. Batterie d'éléments secs selon les revendications 6 à 8, caractérisée en ce que l'élément d'assemblage est, de préférence, un profilé en T debout sur sa tête, dont la partie verticale (14) et la partie horizontale (15) sont en forme de coin.

10. Batterie d'éléments secs selon la revendication 9, caractérisée en ce qu'entre l'encliquetage de l'élément d'assemblage (10) dans le prolongement en forme de fente (11) de l'orifice d'arrivée d'air (7), les parties (14, 15) en forme de coin s'appliquent étroitement contre les chanfreins en forme de coin correspondants de la paroi du couvercle (2) du boîtier le long du prolongement (11), grâce à quoi la plaque de recouvrement (8) et le couvercle (2) du boîtier sont serrés l'un contre l'autre de façon étanche à l'air.

## Claims

1. Oxygen-depolarized dry cell battery, whereof the casing lid comprises at least one air inlet opening and which is provided with means for closing the air inlet opening before use, characterised in that the air inlet opening (7) is closed in an air-tight manner by means of a cover plate (8) which is fixedly connected to the cell lid (2) at at least one attachment point (13) and which is removable only by destruction of the attachment point for use of the cell.

2. Dry cell battery according to Claim 1, characterised in that the attachment point is a predetermined breaking point.

3. Dry cell battery according to Claim 1, characterised in that the attachment point is a welded connection or adhesive connection.

4. Dry cell battery according to one of Claims 1 to 3, characterised in that the casing lid comprises machined longitudinal grooves (3) for receiving the connecting cable (4) for the consumption of current and recesses (5) covered by the cover plate for receiving connecting contacts (6).

5. Dry cell battery according to one of Claims 1 to 4, characterised in that the cover plate is provided with at least one gripping end (12).

6. Dry cell battery according to one of Claims 2 to 5, characterised in that the predetermined breaking point is formed by a joint member (11) attached to the cover plate.

7. Dry cell battery according to Claim 6, characterised in that the joint member is fixedly locked by means of wedge-shaped surfaces or snap edges (18, 19) in a correspondingly shaped recess (11) of the housing lid.

8. Dry cell battery according to Claim 7, characterised in that the joint member is located in a reduced thickness region (13) of the cover plate.

9. Dry cell battery according to Claims 6 to 8, characterised in that the joint member is preferably an inverted T-section, whereof the vertical part (14) and horizontal part (15) have a wedge-shaped construction.

10. Dry cell battery according to Claim 9, characterised in that after engaging the joint member (10) in the slot-like projection (11) of the air supply opening (7), the wedge-shaped parts (14, 15) bear against corresponding wedge-shaped wall chamfers of the casing lid (2) along the projection (11) with a press fit, due to which the cover plate (8) and casing lid (2) are clamped hermetically one against the other.

Fig.2

Fig.1